# EUROPEAN PATENT APPLICATION

(11) **EP 2 575 058 A1**
(43) Date of publication of application: **03.04.2013**
(21) Application number: 12185625.6
(22) Date of filing: 24.09.2012
(51) Int. Cl.: G06F 17/30

(54) **Application generation apparatus, application generation method, and computer-readable recording medium**

(30) Priority: 27.09.2011 JP 2011210847
(71) Applicant: Casio Computer Co., Ltd., Tokyo 151-8543 (JP)
(72) Inventor: Miyahara, Kouji, Hamura-shi, Tokyo 205-8555 (JP)
(74) Representative: Grünecker, Kinkeldey, Stockmair & Schwanhäusser

(57) **Abstract**

The application generation apparatus of the present invention includes: determination means that determines whether a URL is input into a preset cell among a plurality of cells composing a spreadsheet displayed by executing spreadsheet software; and generation means that causes another terminal to acquire an HTML file based on URL information included in code information, and generates a parameter file for defining an application having a function of displaying a browser based on the HTML file, in a case in which the determination means determines that the URL is input.

## Description

This application is based on and claims the benefit of priority from Japanese Patent Application No. 2011-210847, filed on 27 September 2011, the content of which is incorporated herein by reference.

### BACKGROUND OF THE INVENTION

### Field of the Invention

The present invention relates to an application generation apparatus, an application generation method, and a computer-readable recording medium.

### Related Art

A one-dimensional code such as a bar code, and a two-dimensional code such as a QR Code (registered trademark) are known. As a technology that utilizes such codes, for example, Japanese Unexamined Patent Application, Publication No. 2003-330831 (Patent Document 1) discloses a technology, in which a two-dimensional code is read, and based on URL (Uniform Resource Locator) information included in the two-dimensional code thus read, an HTML (Hyper Text Markup Language) file is acquired, the HTML file is interpreted, and a browser such as for a Web page is displayed.

However, in the technology disclosed in Patent Document 1 described above, a sequence of processing, from acquiring an HTML file until displaying a browser based on URL information read from a code, is merely realized by exclusive application software that is implemented in an apparatus in advance.

Therefore, an apparatus without implementation of such exclusive application software cannot execute such a sequence of processing, from acquiring an HTML file until displaying a browser based on URL information read from a code, even if its hardware is configured to be capable of displaying a browser.

Therefore, in order to cause the apparatus without implementation of exclusive application software to execute such a sequence of processing, the exclusive application software is required to be separately generated and installed in the apparatus. However, since knowledge such as knowledge of programming languages or the like used in application software is required for generating the application software, it has been difficult for an end user who uses the apparatus to generate exclusive application software.

Accordingly, an environment has been required to makes it possible to easily generate application software having a function of displaying a browser, based on information included in a code, through a simple operation.

### SUMMARY OF THE INVENTION

An object of the present invention is to easily generate a parameter file for defining an application having a function of displaying a browser based on information included in a code through a simple operation.

The application generation apparatus of the present invention includes: determination means that determines whether a URL is input into a preset cell among a plurality of cells composing a spreadsheet displayed by executing spreadsheet software; and generation means that causes another terminal to acquire an HTML file based on URL information included in code information, and generates a parameter file for defining an application having a function of displaying a browser based on the HTML file, in a case in which the determination means determines that the URL is input.

The computer-readable recording medium of the present invention is a non-temporary computer readable medium storing a program for causing a computer to execute the steps of: determining whether a URL is input into a preset cell among a plurality of cells composing a spreadsheet displayed by executing spreadsheet software; and causing another terminal to acquire an HTML file based on URL information included in code information, and generating a parameter file for defining an application having a function of displaying a browser based on the HTML file, in a case in which the URL is determined to be input.

According to the present invention, it is easily possible to generate a parameter file for defining an application having a function capable of displaying a browser, based on information included in a code, through a simple operation.

### BRIEF DESCRIPTION OF THE DRAWINGS

FIG. 1 is a system configuration diagram showing a configuration of a code information acquisition system according to an embodiment of the present invention;
FIG. 2 is a schematic diagram showing an example of a flow sequence from generating an application until operating the application;
FIG. 3 is a schematic diagram showing another example of a flow sequence from generating an application until activating the application;
FIG. 4 is a schematic diagram showing a description example of parameters;
FIG. 5 is a schematic diagram showing execution of a URL reading application;
FIG. 6 is a schematic diagram showing an upload of a terminal data file;
FIG. 7 is a block diagram showing a hardware configuration of an information processing apparatus according to an embodiment of the present invention;
FIG. 8 is a block diagram showing a hardware configuration of a mobile terminal according to an embodiment of the present invention;
FIG. 9 is a functional block diagram showing a functional configuration for executing application generation processing, in a functional configuration of the information processing apparatus shown in FIG. 7;
FIG. 10 is a functional block diagram showing a functional configuration for executing application execution processing, in a functional configuration of the mobile terminal shown in FIG. 8;
FIG. 11 is a flowchart illustrating a flow of the application generation processing and the application execution processing executed by the information processing apparatus shown in FIG. 7 and the mobile terminal shown in FIG. 8;
FIG. 12 is a flowchart illustrating a flow of parameter file generation processing executed by the information processing apparatus shown in FIG. 7; and
FIG. 13 is a flowchart illustrating a flow of URL determination processing executed by the information processing apparatus shown in FIG. 7.

### DETAILED DESCRIPTION OF THE PREFERRED EMBODIMENT

An embodiment of the present invention is hereinafter described with reference to the drawings.

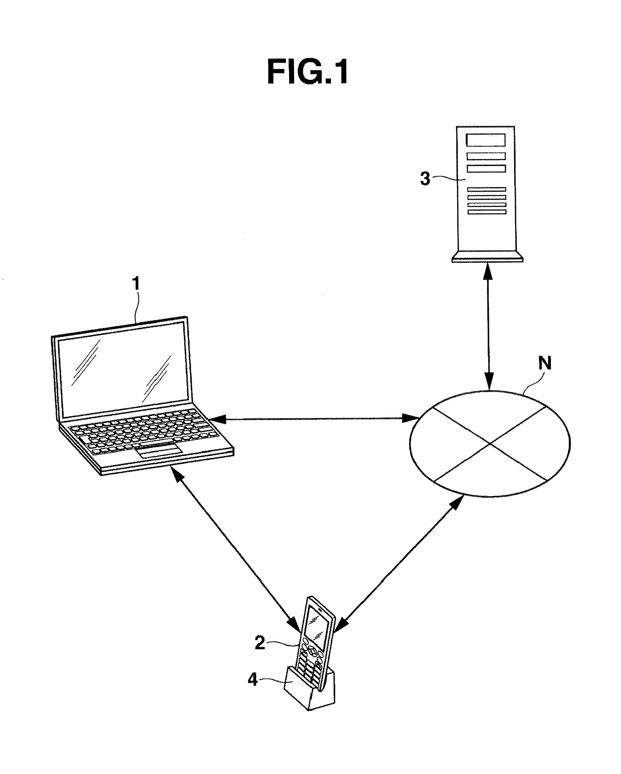

FIG. 1 is a system configuration diagram showing a configuration of a code information acquisition system according to an embodiment of the present invention.

The code information acquisition system is a system that acquires code information from a one-dimensional code or a two-dimensional code attached to, for example, a product or the like. The code information acquisition system is a system that is further capable of consistently executing a flow sequence, from generating application software (hereinafter referred to as an application) for causing a terminal to execute various operations by acquiring code information, until executing the various operations by the terminal in accordance with the application.

As shown in FIG. 1, the code information acquisition system as such includes an information processing apparatus 1, a mobile terminal 2, a server 3, and a cradle 4.

The information processing apparatus 1 generates an application to be executed by the mobile terminal 2, and acquires and stores data generated by the mobile terminal 2 that executed the application. Generation of an application will be described later in detail.

The information processing apparatus 1, the mobile terminal 2 and the server 3 are mutually connected via a network N such as the Internet, and are capable of mutually transmitting and receiving a variety of data.

In a case in which the cradle 4 is directly connected to the information processing apparatus 1, and the mobile terminal 2 is mounted on the cradle 4, the information processing apparatus 1 and the mobile terminal 2 are capable of mutually transmitting and receiving a variety of data via the cradle 4, without the network N intervening therebetween.

The mobile terminal 2 has portability, installs and executes an application acquired from the information processing apparatus 1, and transmits a result of such execution to the information processing apparatus 1 as appropriate.

In this case, the mobile terminal 2 is capable of transmitting the result of execution to the information processing apparatus 1 via the cradle 4, and is also capable of transmitting the result of execution to the information processing apparatus 1 via the network N.

Next, descriptions are provided for an application used in the present embodiment. In the present embodiment, the application is configured by an application main body as a basis, and a configuration file for setting up execution contents such as displaying, processing and the like to be executed by the application main body.

The application main body is preinstalled (stored in advance) in the mobile terminal 2 that executes the application, and the configuration file sets up operations of the application.

The configuration file is a file that defiles processing contents executed by the application main body, and the configuration file is generated by, for example, spreadsheet software such as Excel manufactured by Microsoft, such that even an end user can construct an application. In the present embodiment, since execution contents such as operations of the application are determined by the configuration file, generation of the configuration file is referred to as "generation of an application". More specifically, the configuration file is an ini file, and is generated by converting data in a spreadsheet software format generated by the spreadsheet software (hereinafter referred to as an application definition book) into data in a format adapted to the application main body (hereinafter referred to as a parameter file).

Therefore, the end user can generate an application without the need for knowledge of programming languages or the like, and without the need for a special generation environment.

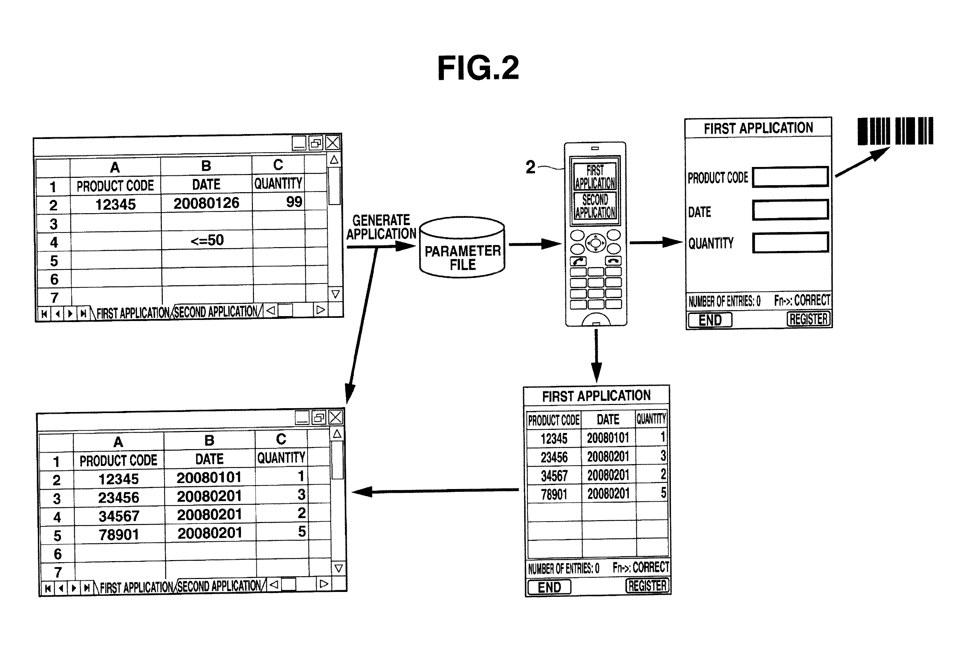

FIG. 2 is a schematic diagram showing an example of a flow sequence from generating an application until operating the application.

In this example, descriptions are provided for an application (hereinafter referred to as a first application) having a function of causing the mobile terminal 2 to acquire product code information or the like included in a one-dimensional code, based on the one-dimensional code (bar code) attached to a product or the like, and eventually to transmit the product code information to the information processing apparatus 1.

As shown in FIG. 2, for the purpose of generating the first application, in a state where the spreadsheet software is activated, when a predetermined preset item is input into a predetermined preset cell among cells composing a spreadsheet displayed by the spreadsheet software, the information processing apparatus 1 generates an application definition book based on contents of such an input.

More specifically, in the first application, the preset cells are cells (in line 2, column A; line 2, column B; and line 2, column C) below cells with descriptions "PRODUCT CODE", "DATE" and "QUANTITY" (in line 1, column A; line 1, column B; and line 1, column C), respectively.

More specifically, a definition item for providing an entry field for a product code in the first application is input into the cell (in line 2, column A) below the cell with the description "PRODUCT CODE" (in line 1, column A). More specifically, it is assumed that a product code is represented by a numeric character string in five digits, and an arbitrary numeric character string in five digits (a product code sample), i.e. "12345" in the example shown in FIG. 2, is input into the cell (in line 2, column A) below the cell with the description "PRODUCT CODE" (in line 1, column A), as a definition item for providing an entry field for the product code in five digits in the first application.

In other words, the user can define that an entry field for a product code in five digits is provided in the first application, through only a simple operation of inputting an arbitrary numeric character string in five digits representing a product code sample into the cell (in line 2, column A) below the cell with the description "PRODUCT CODE" (in line 1, column A).

A definition item for providing an entry field for a date in the first application is input into the cell (in line 2, column B) below the cell with the description "DATE" (in line 1, column B). More specifically, it is assumed that a date is represented by numeric characters of year, month and day, and an arbitrary numeric character string representing the year, month and day (a date sample), i.e. "20080126" in the example shown in FIG. 2, is input into the cell (in line 2, column B) below the cell with the description "DATE" (in line 1, column B), as a definition item for providing an entry field for the date in the first application.

In other words, the user can define that an entry field for a date is provided in the first application, through only a simple operation of inputting arbitrary year, month and day (arbitrary numeric character string) representing a date sample into the cell (in line 2, column B) below the cell with the description "DATE" (in line 1, column B).

A definition item for providing an entry field for a quantity in the first application is input into the cell (in line 2, column C) below the cell with the description "QUANTITY" (in line 1, column C). More specifically, it is assumed that a quantity is represented by a numeric character string in two digits, and an arbitrary numeric character string in two digits representing the quantity (a quantity sample), i.e. "99" in the example shown in FIG. 2, is input into the cell (in line 2, column C) below the cell with the description "quantity" (in line 1, column C), as a definition item for providing an entry field for the quantity in the first application.

In other words, the user can define that an entry field for a quantity is provided in the first application, through only a simple operation of inputting an arbitrary quantity representing a quantity sample into the cell (in line 2, column C) below the cell with the description "QUANTITY" (in line 1, column C).

In this way, simply by inputting predetermined preset items (various samples) into particular preset cells by the user, the first application is defined, and the execution contents of the first application are determined.

As shown in a lower right portion of FIG. 2, in addition to generating the application definition book, the information processing apparatus 1 generates a data book for registering results of executing the application, the data book being associated with the application definition book. Similarly to the application definition book, the data book is configured by a spreadsheet sheet that can be displayed and edited with the spreadsheet software.

After generating the application definition book, based on the application definition book, the information processing apparatus 1 executes conversion of descriptions of parameters, generates a parameter file serving as an ini file, and transmits the parameter file to the mobile terminal 2.

When the parameter file of the first application is transmitted from the information processing apparatus 1, the mobile terminal 2 installs the parameter file so as to be associated with the application main body. As a result, an environment for executing the first application is established in the mobile terminal 2.

By executing the first application, the mobile terminal 2 displays a display screen as shown in a right side portion of FIG. 2. In other words, an application name defined in a sheet field of the spreadsheet software in the information processing apparatus 1, i.e. "FIRST APPLICATION" in this example, is displayed in an upper portion of the display screen of the mobile terminal 2.

Entry fields "PRODUCT CODE", "DATE" and "QUANTITY", which were defined by inputting various items (various samples) into the predetermined cells of the spreadsheet software in the information processing apparatus 1, are displayed in a central portion of the display screen. Various software buttons are displayed in a lower portion of the display screen, and in this example, such buttons are an "end" button, to which an instruction for ending the execution of the first application is assigned, and a "register" button, to which an instruction for registering input data is assigned.

Subsequently, when the user uses an image capture unit 51 of the mobile terminal 2 to capture a one-dimensional code such as a bar code attached to a predetermined product, the mobile terminal 2 analyzes the one-dimensional code, acquires product code information included in the one-dimensional code, i.e. a numeric character string in five digits, and displays the numeric character string in the entry field "PRODUCT CODE".

Almost concurrently with doing so, the mobile terminal 2 recognizes the date when the information (product code information) of the one-dimensional code was acquired, and displays the date in the entry field "DATE".

When the user inputs a quantity of the product to which the one-dimensional code is attached, and operates the "REGISTER" button, the data thus input (hereinafter referred to as a terminal data file) is stored into the mobile terminal 2, and the contents of the terminal data file (a list of the data stored) are displayed.

Subsequently, for example, when the mobile terminal 2 is set on the cradle 4, the terminal data file is transmitted to the information processing apparatus 1.

When the information processing apparatus 1 receives the terminal data file, the information processing apparatus 1 registers the data of the terminal data file with the data book, in consideration of browsing or editing by the spreadsheet software.

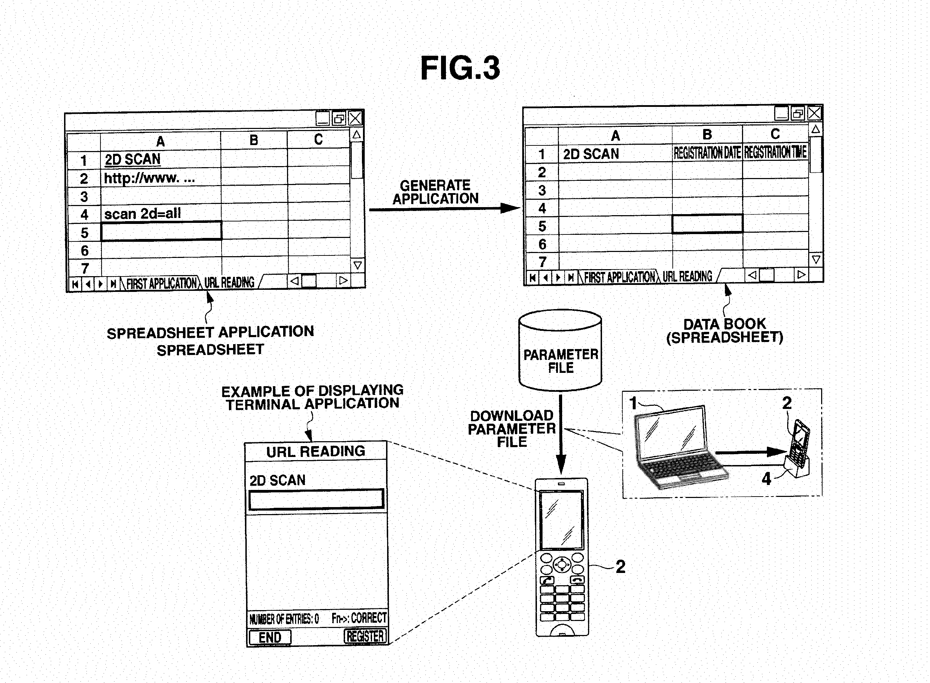

FIG. 3 is a schematic diagram showing another example of a flow sequence from generating an application until activating the application.

In this example, descriptions are provided for an application (hereinafter referred to as a URL reading application) having a function of executing a sequence of processing of causing the mobile terminal 2 to read URL information from a two-dimensional code such as a QR Code (registered trademark) attached to a product or the like, acquire an HTML file based on the URL information, and display the information on a browser based on the HTML file.

As shown in FIG. 3, for the purpose of generating the URL reading application, in a state where the spreadsheet software is activated, when a predetermined preset item is input into a predetermined preset cell among cells composing a sheet displayed by the spreadsheet software, the information processing apparatus 1 generates an application definition book.

More specifically, in the URL reading application, the preset cell is a cell (in line 2, column A) below a cell with a description "2D SCAN" (in line 1, column A), and a definition item for instructing generation of the URL reading application is input into the preset cell.

More specifically, a character string (hereinafter referred to as a URL sample character string) representing a sample of a URL, i.e. a URL sample character string with at least a first character string of http:// or https://, is input into the cell (in line 2, column A) below the cell with the description "2D SCAN" (in line 1, column A), as a definition item for generating the URL reading application.

In other words, the user can define an instruction for generating the URL reading application, through only a simple operation of inputting a URL sample character string representing an arbitrary URL into the cell (in line 2, column A) below the cell with the description "2D SCAN" (in line 1, column A).

In this way, simply by inputting a predetermined preset item (a URL sample character string) into a particular preset cell by the user, the URL reading application is defined, and the execution contents thereof are determined.

As shown in a lower right portion of FIG. 2, in addition to generating the application definition book, the information processing apparatus 1 generates a data book for registering results of executing the application, the data book being associated with the application definition book.

Similarly to the application definition book, the data book is configured by a spreadsheet sheet that can be displayed and edited with the spreadsheet software.

After generating the application definition book, based on the application definition book, the information processing apparatus 1 executes conversion of descriptions of parameters, generates a parameter file serving as an ini file, and transmits the parameter file to the mobile terminal 2.

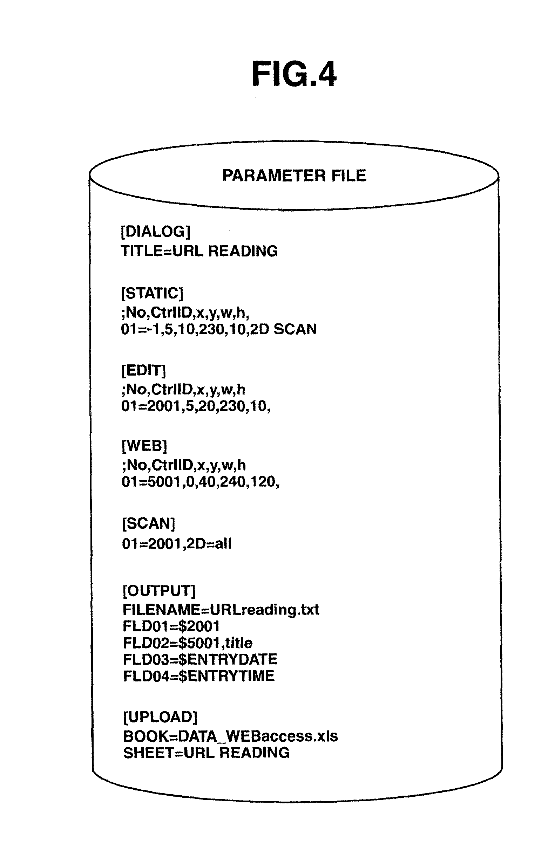

A specific example of the parameter file will be described later with reference to FIG. 4.

When the parameter file of the URL reading application is transmitted from the information processing apparatus 1, the mobile terminal 2 installs the parameter file so as to be associated with the application main body. As a result, an environment for executing the URL reading application is established in the mobile terminal 2.

By executing the URL reading application, the mobile terminal 2 displays a display screen as shown in a lower middle portion of FIG. 3. In other words, an application name defined in a sheet field of the spreadsheet software in the information processing apparatus 1, i.e. "URL READING" in this example, is displayed in an uppermost portion of the display screen of the mobile terminal 2. An entry field for the URL that was read from the two-dimensional code (hereinafter also referred to as an input box for URL information) is displayed in an upper portion below the uppermost portion of the display screen. A display area for displaying an HTML file that was downloaded from the URL (an area for displaying a browser) is displayed in a central portion of the display screen. Various software buttons are displayed in the lower portion of the display screen, and in this example, such buttons are an "END" button, to which an instruction for ending the execution of the URL reading application is assigned, and a "REGISTER" button, to which an instruction for registering input data is assigned.

FIG. 4 is a schematic diagram showing a structure example of the parameter file of the URL reading application as such.

The parameter file is configured by describing various parameters as follows for each item of [DIALOG], [STATIC], [EDIT], [WEB], [SCAN], [OUTPUT], and [UPLOAD].

A parameter showing a title bar character string is described in [DIALOG]. In this example, since "URL READING" is described as the title bar character string, "URL READING" is displayed in the title bar in the uppermost portion of the display screen, as shown in a lower left portion of FIG. 3.

Parameters regarding a display area and the like for a static label are described in [STATIC]. In other words, in this example, "2D SCAN" is described as the static label, and "01 = 1, 5, 10, 230, 10" is described as coordinates showing a layout position and as a display size of the static label. Therefore, the static label "2D SCAN" is displayed in such a position and size on the display screen, as shown in the lower left portion of FIG. 3.

Information regarding a display area and the like of the input box for URL information is described in [EDIT]. In other words, in this example, "01 = 2001, 5, 20, 230, 10" is described as coordinates showing a layout position and as a display size of the input box for URL information. Therefore, the input box is displayed in such a position and size on the display screen, as shown in the lower left portion of FIG. 3.

Information regarding a display area and the like of the HTML file is described in [WEB]. In this example, "01 = 5001, 0, 40,240,120" is described, and the display area is provided in such a position and size on the display screen, as shown in the lower left portion of FIG. 3.

Information regarding a selected position for performing a scanning operation is described in [SCAN]. In other words, in this example, "01 = 2001, 2D = all" is described, and scanning is initiated when a trigger button is depressed in a state where the input box is selected.

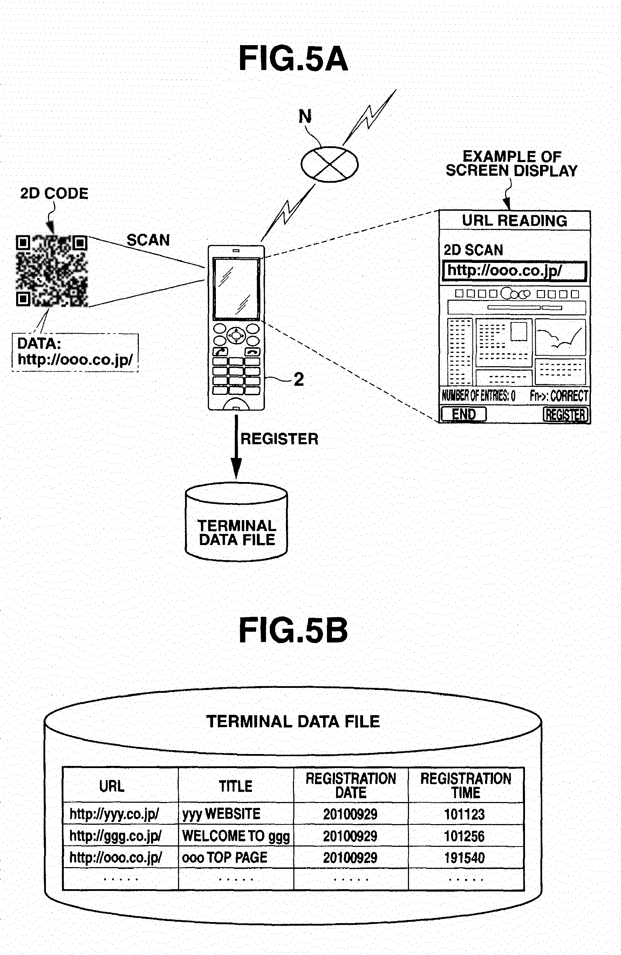

A destination (a filename) of an output from the mobile terminal 2, as well as an output destination and an output value in the file are described in [OUTPUT]. Detailed descriptions for [OUTPUT] will be provided later with reference to FIG. 5B.

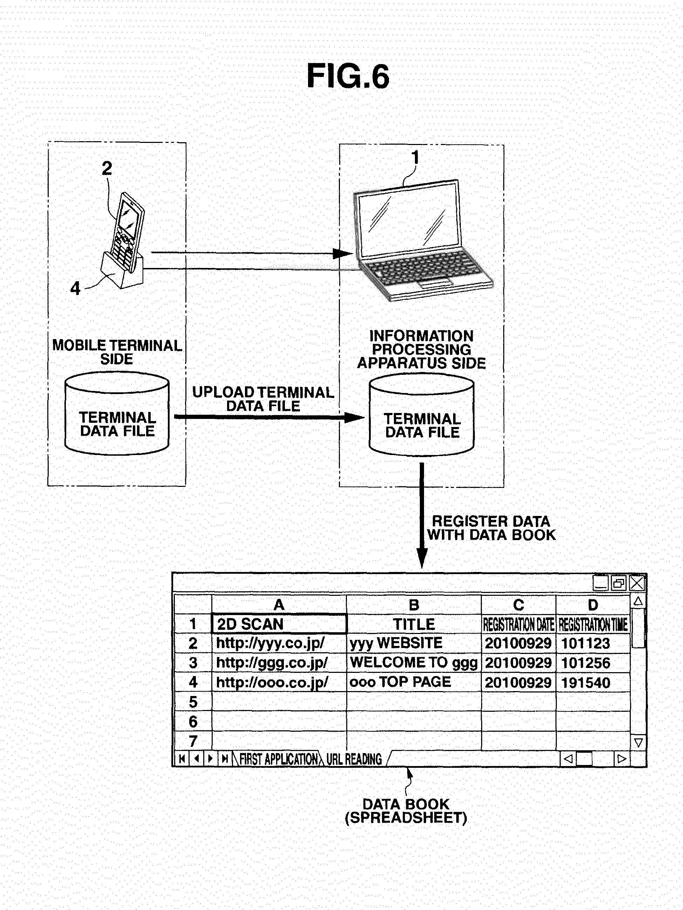

A location of a storage destination of a terminal data file is described in [UPLOAD]. More specifically, a data book name and a sheet name of the information processing apparatus 1 are described in [UPLOAD]. Detailed descriptions for [UPLOAD] will be provided later with reference to FIG. 6.

FIG. 5 is a schematic diagram showing execution of the URL reading application. More specifically, FIG. 5A is a schematic diagram showing execution of the URL reading application, and FIG. 5B is a schematic diagram showing a terminal data file that is generated by executing the URL reading application.

As shown in FIG. 5A, when the trigger button is depressed by the user while the URL reading application is running, the mobile terminal 2 acquires code information from a 2D code (a QR Code (registered trademark) in the present embodiments).

The mobile terminal 2 analyzes the code information, acquires URL information such as "http://xxx.co.jp" included in the code information, and displays the URL information in the input box for URL information below the static label "2D SCAN", as shown in a right side portion of FIG. 5A.

Based on the URL information ("http://xxx.co.jp"), the mobile terminal 2 acquires an HTML file, which exists in a location designated by the URL information, via the network N. Based on the HTML file, the mobile terminal 2 displays a browser in an area for displaying an HTML file (a central portion of the screen), as shown in the right side portion of FIG. 5A.

After the browser is displayed in this manner, when the user depresses the "REGISTER" button, the terminal data file is stored into the mobile terminal 2, and the contents of the terminal data file (a list of the data thus stored) are displayed, as shown in a lower central portion of FIG. 5A.

As shown in FIG. 5B, the terminal data file is configured by URL information, "TITLE" of a WEB page acquired from a header of an HTML file, "REGISTRATION DATE", and "REGISTRATION TIME".

As results of executing the URL reading application at this time, "http://xxx.co.jp" as the URL, a character string "xxx TOP PAGE" acquired from the header of the HTML file as the title, a numeric character string "20100929" representing September 29, 2010 as the registration date, and a numeric character string "191540" representing the time 19:15:40 as the registration time are registered with the terminal data file.

In addition to the results of executing the application as described above, titles, registration dates and registration times corresponding to URL information "http://yyy.co.jp" and "http://ggg.co.jp", respectively, are also registered with the terminal data file, as results of executing the application in the past.

As described above, the terminal data file is generated based on descriptions in [OUTPUT] that is the parameter file shown in FIG. 4. More specifically, a filename to be stored is designated based on a description "FILENAME=URLreading.txt". URL information that is input into the input box is stored based on a description "FLD01=$2001". A title in a header of an HTML file is stored based on a description "FLD02=$5001, title". A registration date is stored based on a description "FLD03=$ENTRYDATE". A registration time is stored based on a description "FLD03=$ENTRYTIME".

FIG. 6 is a schematic diagram showing an upload of the terminal data file.

After the terminal data file is stored, for example, when the mobile terminal 2 is mounted on the cradle 4 as shown in FIG. 6, the terminal data file is transmitted (uploaded) to the information processing apparatus 1.

When the information processing apparatus 1 receives the terminal data file, the information processing apparatus 1 registers the data of the terminal data file with the data book generated as a spreadsheet in consideration of browsing or editing thereof with the spreadsheet software. More specifically, as shown in a lower portion of FIG. 6, the information processing apparatus 1 inputs the data of the terminal data file as shown in FIG. 5B into cells below an item "2D SCAN" (in line 1, column A), an item "TITLE" (in line 1, column B), an item "REGISTRATION DATE" (in line 1, column C), and an item "REGISTRATION TIME" (in line 1, column D), respectively, thereby registering the data of the terminal data file with the data book.

As described above, the terminal data file is uploaded based on the descriptions in [UPLOAD] that is the parameter file shown in FIG. 4. More specifically, a filename to be stored is designated based on a description "BOOK=DATE_WEBaccess.xls". A sheet to be stored is designated based on a description "SHEET=URLreading".

As discussed above, in the code information acquisition system, when the predetermined inputs are made into the spreadsheet, the information processing apparatus 1 generates various applications (the first application and the URL reading application) that are capable of executing a variety of processing as described above. The mobile terminal 2 installs and executes an application generated by the information processing apparatus 1, and transmits a result of such execution to the information processing apparatus 1. When the information processing apparatus 1 receives the result of execution as such, the information processing apparatus 1 registers the result with a spreadsheet (data book) that is similar to the abovementioned spreadsheet.

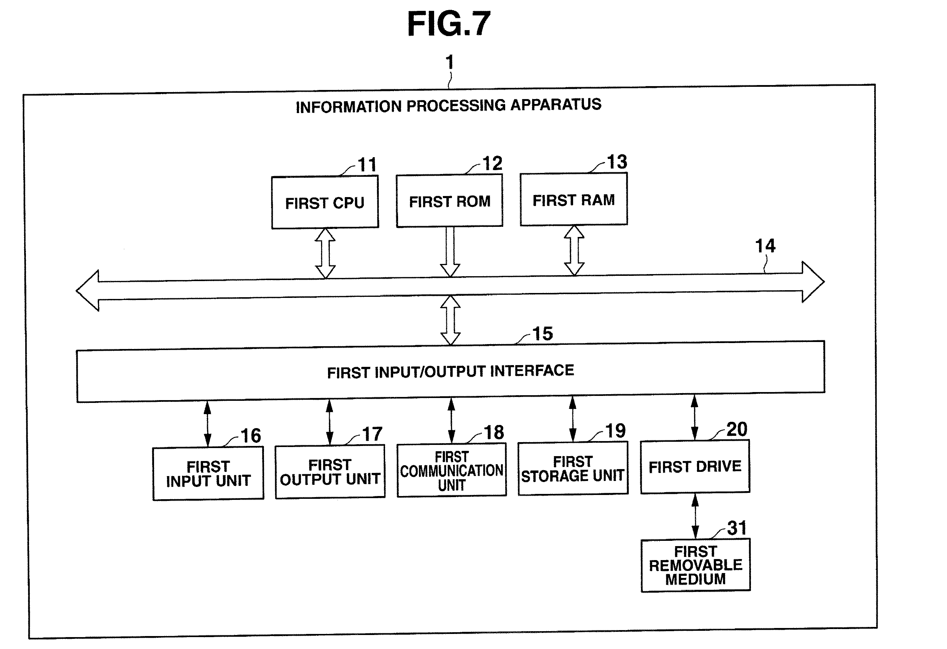

Next, with reference to FIG. 7 and the drawings following that, detailed descriptions are individually provided for the information processing apparatus 1 and the mobile terminal 2, among the components of the code information acquisition system as such.

FIG. 7 is a block diagram showing a hardware configuration of the information processing apparatus 1 according to an embodiment of the present invention.

The information processing apparatus 1 is configured as a personal computer such as, for example, a notebook-type personal computer. The information processing apparatus 1 includes a first CPU (Central Processing Unit) 11, first ROM (Read Only Memory) 12, first RAM (Random Access Memory) 13, a first bus 14, a first input/output interface 15, a first input unit 16, a first output unit 17, a first communication unit 18, a first storage unit 19, and a first drive 20.

The first CPU 11 executes a variety of processing according to programs that are recorded in the first ROM 12, or programs that are loaded from the first storage unit 19 to the first RAM 13.

The first RAM 13 also stores data and the like necessary for the first CPU 11 to execute the variety of processing, as appropriate.

The first CPU 11, the first ROM 12 and the first RAM 13 are connected to one another via the first bus 14. The first bus 14 is also connected with the first input/output interface 15. The first input/output interface 15 is connected to the first input unit 16, the first output unit 17, the first communication unit 18, the first storage unit 19 and the first drive 20.

The first input unit 16 is configured by various buttons and the like, and inputs a variety of information in accordance with instruction operations by the user.

The first output unit 17 is configured by a display, a speaker and the like, and outputs, for example, an image such as the screens shown in FIGS. 2 and 3, and sound.

The first communication unit 18 controls communication with other devices (not shown) via a network, which includes the Internet.

The first storage unit 19 is configured by a hard disk, DRAM (Dynamic Random Access Memory) or the like, and stores data of various images.

A first removable medium 31 made of a magnetic disk, an optical disk, a magneto-optical disk, semiconductor memory or the like is mounted in the first drive 21. Programs that are read via the first drive 20 from the first removable medium 31 are installed in the first storage unit 19, as necessary. Similarly to the first storage unit 19, the first removable medium 31 can also store a variety of data such as the image data stored in the first storage unit 19.

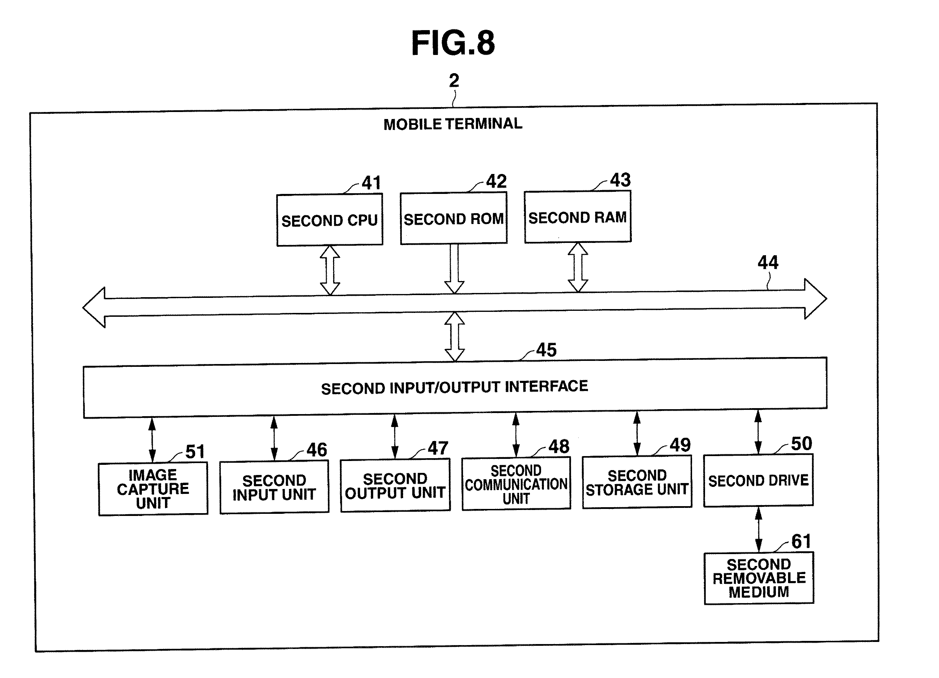

FIG. 8 is a block diagram showing a hardware configuration of the mobile terminal 2 according to an embodiment of the present invention.

As shown in FIG. 8, the configuration of the mobile terminal 2 is basically similar to the configuration of the information processing apparatus 1. More specifically, as the configuration, the mobile terminal 2 includes a CPU, ROM, RAM, a bus, an input/output interface, an input unit, an output unit, a communication unit, a storage unit, and a drive. Descriptions are omitted for the configuration similar to the configuration of the information processing apparatus 1.

The mobile terminal 2 further includes an image capture unit 51. The image capture unit 51 captures various codes such as, for example, a one-dimensional code such as a bar code, and a two-dimensional code such as a QR Code (registered trademark).

A second input unit 46 includes a trigger button (not shown) for executing an application that is activated.

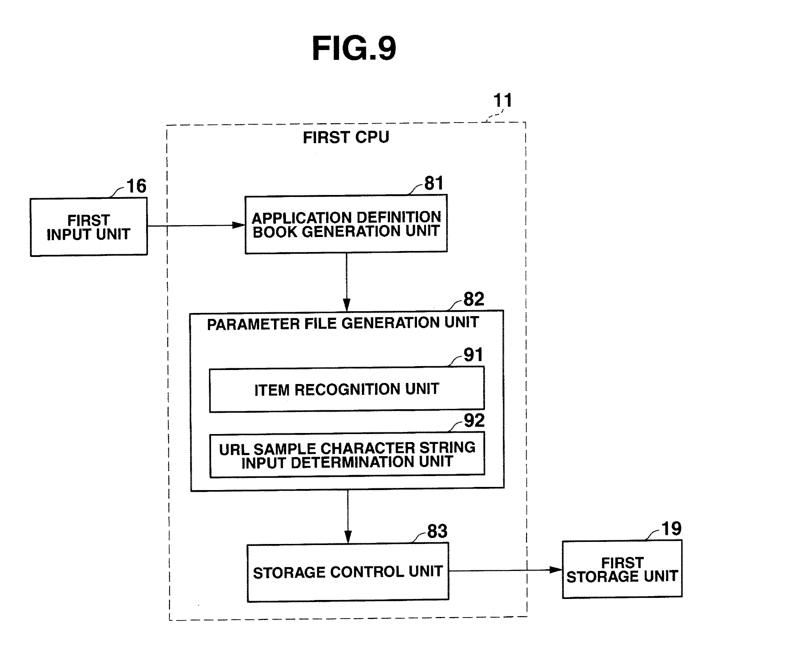

FIG. 9 is a functional block diagram showing a functional configuration for executing application generation processing, in the functional configuration of the information processing apparatus 1. Among the first application and the URL reading application (hereinafter also referred to as a second application so as to be distinguished from the first application), descriptions are hereinafter provided for a case in which the second application is generated and executed.

The application generation processing refers to a sequence of processing until generating an application (the URL reading application being the second application in this example) installed in the mobile terminal 2, i.e. a sequence of processing until generating a configuration file of an application main body.

In a case in which the application generation processing is executed, an application definition book generation unit 81, a parameter file generation unit 82, and a storage control unit 83 function in the first CPU 11, as shown in FIG. 9.

Based on an input from the first input unit 16, the application definition book generation unit 81 generates an application definition book that is a spreadsheet in the file format for the spreadsheet software. Based on the input from the first input unit 16, the application definition book generation unit 81 also generates a data book that is a spreadsheet in the file format for the spreadsheet software, in addition to the application definition book.

Based on the application definition book generated by the application definition book generation unit 81, the parameter file generation unit 82 generates a parameter file. In other words, in a case in which it is determined that a URL sample character string is input, the parameter file generation unit 82 causes another terminal to acquire an HTML file based on URL information included in code information, and generates a parameter file as a single component of the second application having a function of displaying a browser based on the HTML file. In other words, the parameter file generated by the parameter file generation unit 82 is a configuration file of the application main body (another component of the second application) preinstalled in the mobile terminal 2, as described above.

The parameter file generation unit 82 not only generates the second application having a function corresponding to the item that was input into the application definition book (a function of acquiring URL information from code information and displaying a browser), but also generates a parameter file so as to add functions, such as a function of storing files related to acquiring the URL information and displaying the browser, to the second application.

The parameter file generation unit 82 includes an item recognition unit 91 and a URL sample character string input determination unit 92.

The item recognition unit 91 recognizes an input of an item (a numeric character string or a non-numeric character string) into a predetermined cell of a spreadsheet. More specifically, for example, as shown in the upper left portion of FIG. 3, in a case in which a predetermined character string is input as an item into a predetermined cell (in line 2, column A) of the spreadsheet, the item recognition unit 91 recognizes the input of the character string. The item recognition unit 91 also recognizes an input of a character string or the like as an input of a sheet name into a sheet name entry field (here, URL READING).

In a case in which the item recognition unit 91 recognizes that an item is input into the predetermined cell (in line 2, column A) of the spreadsheet, the URL sample character string input determination unit 92 determines whether the item corresponds to a URL sample character string. In other words, the URL sample character string input determination unit 92 determines whether the URL sample character string is input into a predetermined preset cell (in line 2, column A) among a plurality of cells composing the spreadsheet displayed by executing the spreadsheet software. More specifically, as shown in FIG. 3, the URL sample character string input determination unit 92 determines whether a character string including at least "http://" or "https://" in its first character string is input as a URL sample character string into the predetermined cell (in line 2, column A).

Based on the items and the URL sample character string defined in the application definition book, the parameter file generation unit 82 determines an operation of the application (an operation of displaying a browser in a case in which the URL information is acquired from information of a two-dimensional code), and further adds various operations (for example, an operation of storing an acquired file) as necessary operations of the application, thereby generating a parameter file.

In other words, the parameter file generation unit 82 converts the application definition book, which is the file in the format for the spreadsheet software, into the parameter file in the ini file format with the descriptions as shown in FIG. 4.

The storage control unit 83 causes the parameter file generated by the parameter file generation unit 82 to be stored into the first storage unit 19. For example, when the mobile terminal 2 is mounted on the cradle 4, the parameter file stored in the first storage unit 19 is downloaded to the mobile terminal 2.

The first storage unit 19 stores, for example, files of the application definition book, parameter files, and the like.

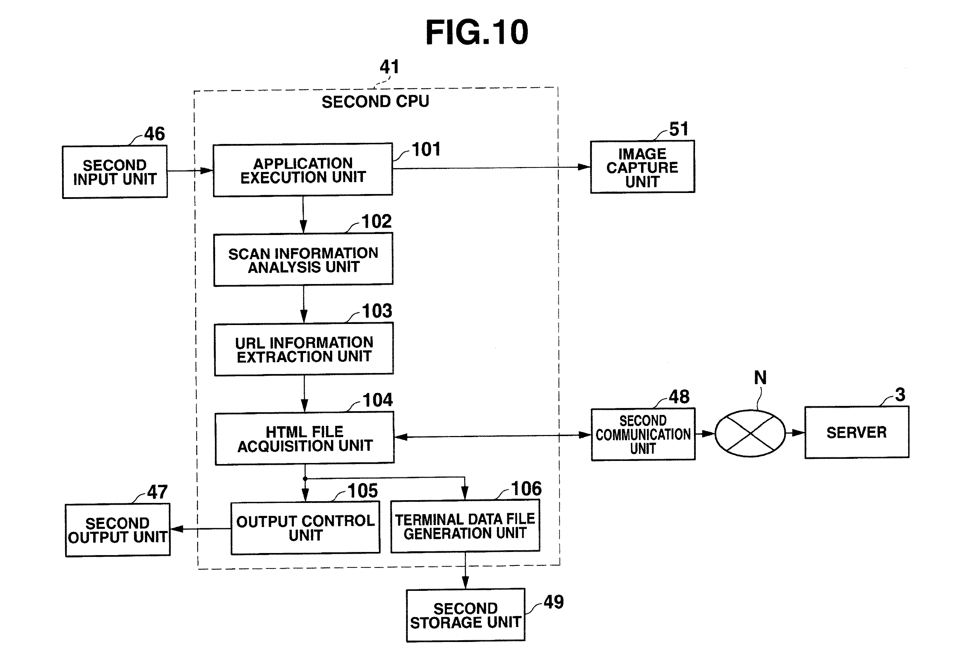

FIG. 10 is a functional block diagram showing a functional configuration of the mobile terminal 2 side for executing the application generated by the information processing apparatus 1 having the functional configuration as shown in FIG. 9. Similarly to the descriptions in FIG. 9, descriptions are hereinafter provided for the second application (the URL reading application) as an example.

Application execution processing is a sequence of processing for the mobile terminal 2 to execute the second application (the URL reading application) generated by the application generation processing; in other words, the application execution processing is a sequence of processing of acquiring an HTML file from URL information acquired from a two-dimensional code, displaying a browser based on the HTML file, and storing and transmitting information related to the HTML file.

As shown in FIG. 10, in a case in which the application execution processing is executed, an application execution unit 101, a scan information analysis unit 102, a URL information extraction unit 103, an HTML file acquisition unit 104, an output control unit 105, and a terminal data file generation unit 106 function in a second CPU 41.

For example, as shown in FIG. 5A, the application execution unit 101 activates an application, and executes a variety of processing involved with such execution of the application, such as, for example, processing of controlling image capture with the image capture unit 51 when the trigger button (not shown) is depressed.

The scan information analysis unit 102 analyzes information (scan information) of an image captured by the image capture unit 51. More specifically, the scan information analysis unit 102 decodes an image of a two-dimensional code, and analyzes information expressed in the two-dimensional code. The URL information extraction unit 103 extracts URL information (for example, "http://xxx.co.jp" as shown in FIG. 6) from the information included in the two-dimensional code analyzed by the scan information analysis unit 102.

Based on the URL information extracted by the URL information extraction unit 103, the HTML file acquisition unit 104 acquires an HTML file from the server 3 via the network N by controlling a second communication unit 48.

The output control unit 105 controls the display of a second output unit 47 so as to enable a browser to be displayed based on the HTML file thus acquired.

Based on the HTML file thus acquired, and information about the HTML file (for example, as shown in FIG. 5B, the URL information, the header information of the HTML file, the registration date and the registration time, as bases of acquiring the HTML file), the terminal data file generation unit 106 generates a terminal data file, and stores the terminal data file into a second storage unit 49.

Next, descriptions are provided for the application generation processing and the application execution processing executed by the information processing apparatus 1 and the mobile terminal 2. Similarly to the descriptions in FIGS. 9 and 10, descriptions are hereinafter provided for the second application (the URL reading application) as an example.

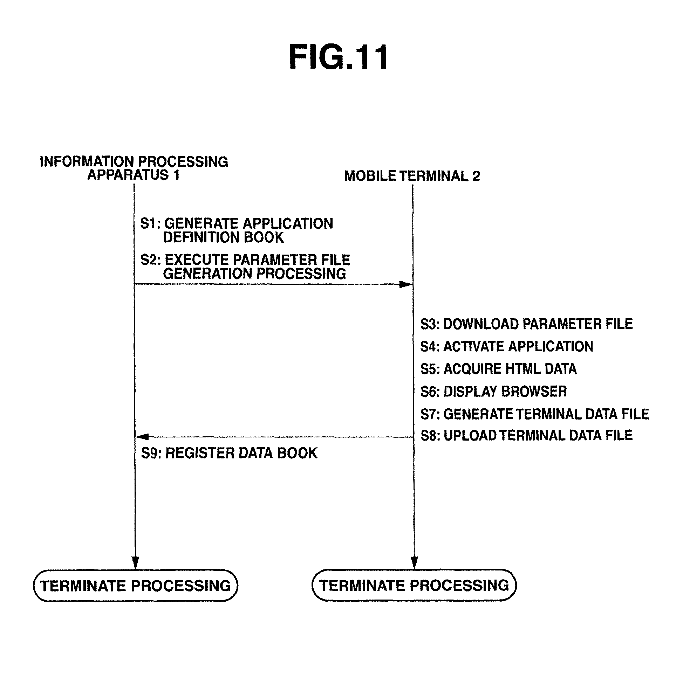

FIG. 11 is a flowchart illustrating a flow of the application generation processing and the application execution processing executed by the information processing apparatus 1 and the mobile terminal 2.

In Step S1, the application definition book generation unit 81 of the information processing apparatus 1 executes application definition book generation processing. More specifically, when a URL sample character string is input into a predetermined cell (in line 2, column A) of the spreadsheet, the application definition book generation unit 81 generates an application definition book as shown in the upper left portion of FIG. 3. In doing so, the application definition book generation unit 81 generates a data book in addition to the application definition book.

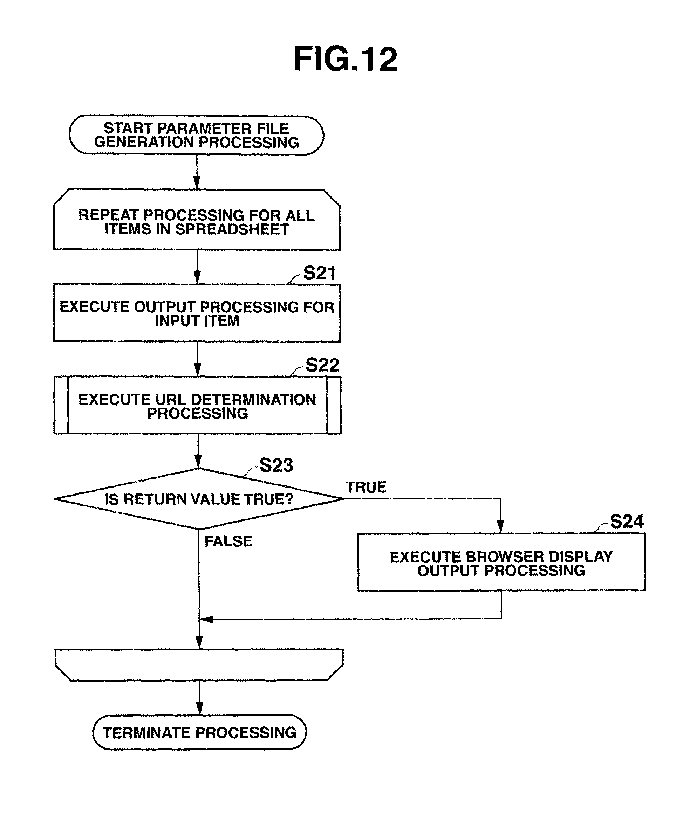

In Step S2, the parameter file generation unit 82 executes parameter file generation processing. More specifically, based on the application definition book (the information such as the URL sample character string that was input into the predetermined cell) generated by the application definition book generation unit 81, the parameter file generation unit 82 generates a parameter file. Subsequently, the parameter file is stored into the first storage unit 19. Descriptions for a flow of detailed operations of the parameter file generation processing will be provided later with reference to FIG. 12.

In Step S3, the application execution unit 101 of the mobile terminal 2 downloads the parameter file. More specifically, when the mobile terminal 2 is set on the cradle 4, the application execution unit 101 controls the second communication unit 48 to download the parameter file from the first storage unit 19, as shown in FIG. 3. Subsequently, the parameter file is installed as a configuration file on the mobile terminal 2, and is associated with the application main body, a result of which the application can be executed.

In Step S4, the application execution unit 101 activates the application. The application is activated when the user depresses the trigger button.

More specifically, as shown in FIG. 5A, in a state where the application is running in the mobile terminal 2, and the entry field is selected, when the trigger button is depressed, the application execution unit 101 acquires an image of a two-dimensional code through a capturing operation of the image capture unit 51. Subsequently, the scan information analysis unit 102 analyzes the image of the two-dimensional code. The URL information extraction unit 103 extracts URL information from the image of the two-dimensional code thus analyzed.

In Step S5, based on the URL information thus extracted, the HTML file acquisition unit 104 acquires an HTML file.

In Step S6, based on the HTML file, the output control unit 105 controls the second output unit 47 to display a browser such as, for example, a browser shown in the right portion of FIG. 5A.

In Step S7, the terminal data file generation unit 106 generates a terminal data file. More specifically, for example, the terminal data file generation unit 106 generates a terminal data file as shown in FIG. 5B from the HTML file thus acquired. The terminal data file thus generated is stored into the second storage unit 49.

In Step S8, the terminal data file generation unit 106 uploads the terminal data file. More specifically, when the mobile terminal 2 is mounted on the cradle 4, the terminal data file generation unit 106 controls the second communication unit 48 to upload the terminal data file to the information processing apparatus 1, although not illustrated in FIG. 10.

In Step S9, the storage control unit 83 of the information processing apparatus 1 registers the terminal data file with the data book. More specifically, as shown in the lower portion of FIG. 6, the storage control unit 83 registers the data of the terminal data file thus uploaded as a predetermined item of the data book.

Next, regarding the application generation processing in FIG. 11 described above, the flow of the parameter file generation processing in Step S2 is described in detail with reference to FIG. 12.

FIG. 12 is a flowchart showing the flow of the parameter file generation processing. Processing in Step S21 and thereafter is repeated for all the items in the application definition book, and the parameter file generation processing is terminated when the processing is completed for all the items.

In Step S21, the item recognition unit 91 outputs an input item. More specifically, for example, as shown in FIG. 3, when the item recognition unit 91 recognizes a predetermined cell (in line 2, column A) below a cell (in line 1, column A) as a cell into which an item should be input, the item recognition unit 91 outputs the content that is input into the cell.

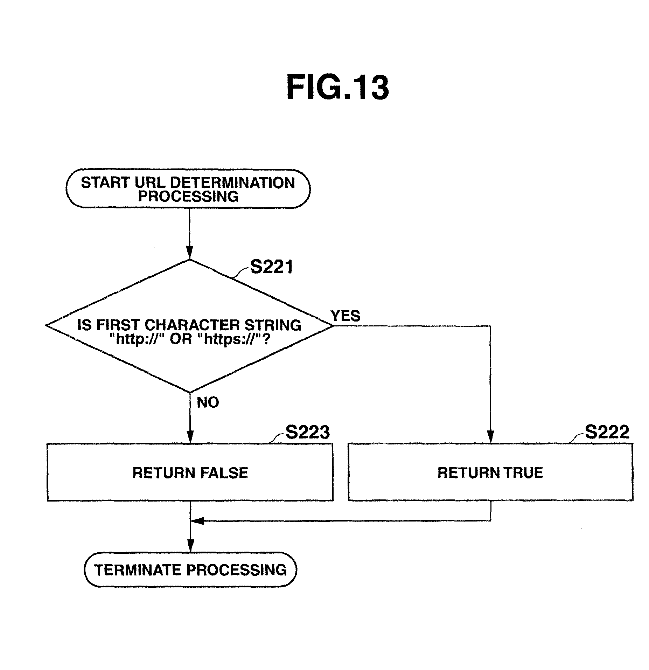

In Step S22, the URL sample character string input determination unit 92 executes URL determination processing. More specifically, the URL sample character string input determination unit 92 determines whether the content that was output in the processing in Step S21 is a URL sample character string. A detailed flow of the URL determination processing will be described later with reference to FIG. 13.

Here, in a case in which the URL sample character string input determination unit 92 determines that the content is a URL sample character string, TRUE is output as a return value; and in a case in which the URL sample character string input determination unit 92 determines that the content is not a URL sample character string, FALSE is output as a return value.

In Step S23, the parameter file generation unit 82 determines whether the return value is TRUE.

In a case in which the return value is not TRUE, i.e. the return value is FALSE since a URL sample character string is not input, the determination in Step S23 is FALSE, and the processing advances to another item (the processing returns to Step S21); otherwise, in a case in which the determination is completed for all the items, the processing is terminated.

In Step S24, the parameter file generation unit 82 executes browser display output processing. More specifically, based on the determination being TRUE, the parameter file generation unit 82 executes processing of writing data into the parameter file. More specifically, for example, as shown in FIG. 4, descriptions such as [WEB] are written into the parameter file. In doing so, in addition to the descriptions such as [WEB], the parameter file generation unit 82 executes processing of writing descriptions such as functions of [OUTPUT] and [UPLOAD] associated with the 2D scan.

Subsequently, the processing advances to another item (returns to Step S21); otherwise, the processing is terminated if determination is completed for all the items.

Next, regarding the flow of the parameter file generation processing as shown in FIG. 12, a detailed flow of the URL determination processing is described with reference to FIG. 13. FIG. 13 is a flowchart showing the detailed flow of the URL determination processing.

In Step S221, the URL sample character string input determination unit 92 determines whether the first character string of the content that was output in the processing in Step S21 of FIG. 11 is "http://" or "https://" in the character string that was input into the predetermined cell (in line 2, column A of FIG. 3) in this example.

In a case in which the first character string is not "http://" or "https://", the determination in Step S221 is NO, and the processing advances to Step S223.

In Step S223, the URL sample character string input determination unit 92 returns FALSE (return value). Subsequently, the URL determination processing is terminated.

On the other hand, in a case in which the first character string is "http://" or "https://", the determination in Step S221 is YES, and the processing advances to Step S222.

In Step S222, the URL sample character string input determination unit 92 returns TRUE (return value). Subsequently, the URL determination processing is terminated.

Therefore, the code information acquisition system can easily generate an application having a function of displaying a browser, based on information included in a code.

The information processing apparatus 1 includes the URL sample character string input determination unit 92 and the parameter file generation unit 82. The URL sample character string input determination unit 92 determines whether a URL sample character string is input into a predetermined preset cell among a plurality of cells composing the spreadsheet displayed by executing the spreadsheet software. In a case in which the URL sample character string input determination unit 92 determines that a URL sample character string is input, the parameter file generation unit 82 causes another terminal to acquire an HTML file based on the URL information included in the code information, and generates an application having a function of displaying a browser based on the HTML file.

With such a configuration, in a case in which it is determined that a URL sample character string is input through the spreadsheet software, the information processing apparatus 1 can generate a URL acquisition application that acquires an HTML file based on the URL information included in the code information thus acquired, and displays a browser based on the HTML file thus acquired. Therefore, the user can easily generate an application having a function capable of displaying a browser based on information included in a code, without the need for special knowledge of generating an application.

The URL sample character string input determination unit 92 determines a character string having at least the first character string of "http://" or "https://" as a URL sample character string.

Therefore, since the user may simply input an example of a URL, without the need for special knowledge of generating an application. For example, since the user can also generate an application by copying and pasting a URL that is actually in use, an application can be further easily generated.

The parameter file generation unit 82 further adds, to an application, a function of storing the URL information acquired from the code information by executing the application.

With such a configuration, in addition to the basic function (the function of displaying a browser), a function of further storing related URL information is automatically added to an application.

Therefore, simply through the user's operation of generating only a basic function, a function associated with the basic function can be automatically added, and a convenient application can be automatically generated.

The parameter file generation unit 82 further adds a function of outputting a result of executing an application, in the format that can be stored in a spreadsheet that is displayed by executing the spreadsheet software.

With such a configuration, a function of storing a result of executing an application into a spreadsheet, which can be generated by the spreadsheet software, is automatically added to the application.

Therefore, simply through the user's operation of generating only a basic function, a function associated with the basic function can be automatically added, and a convenient application can be automatically generated.

The present invention is not limited to the embodiment described above, and any modifications and improvements thereto within the scope that can realize the object of the present invention are included in the present invention.

The abovementioned embodiment is configured to upload and download data through an arbitrary specification, but it is not limited thereto.

In the abovementioned embodiment, as shown in FIG. 3, the URL sample character string input determination unit 92 determines whether a character string "http://" or "https://" is input as a URL sample character string into a cell in line 2, column A, but it is not limited thereto. The character string for the URL sample character string input determination unit 92 may be any input example of a URL, and it is preferable for its first character string to include at least "http".

In the abovementioned embodiment, the image processing apparatus 1, to which the present invention is applied, has been described by taking a notebook-type personal computer as an example, but the present invention is not particularly limited thereto.

The present invention can be generally applied to any electronic device having an application generation processing function. More specifically, for example, the present invention can be applied to a printer, a television, a video camera, a portable navigation device, a mobile telephone device, a portable game device, and the like.

The processing sequence described above can be executed by hardware, and can also be executed by software.

In other words, the hardware configuration shown in FIG. 9 is merely an illustrative example, and the present invention is not particularly limited thereto. In other words, the types of functional blocks employed to realize the abovementioned functions are not particularly limited to the example shown in FIG. 9, so long as the image processing apparatus 1 includes the functions enabling the aforementioned processing sequence to be executed in its entirety.

A single functional block may be configured by a single piece of hardware, a single installation of software, or any combination thereof.

In a case in which the processing sequence is executed by software, a program configuring the software is installed from a network or a storage medium into a computer or the like.

The computer may be a computer embedded in dedicated hardware. Alternatively, the computer may be a computer capable of executing various functions by installing various programs, e.g., a general-purpose personal computer.

The storage medium containing such a program can not only be constituted by the first removable medium 31 shown in FIG. 7 distributed separately from the device main body for supplying the program to a user, but can also be constituted by a storage medium or the like supplied to the user in a state incorporated in the device main body in advance. The first removable medium 31 is composed of a magnetic disk (including a floppy disk), an optical disk, a magnetic optical disk, or the like, for example. The optical disk is composed of a CD-ROM (Compact Disk-Read Only Memory), a DVD (Digital Versatile Disk), or the like, for example. The magnetic optical disk is composed of an MD (Mini-Disk) or the like. The storage medium supplied to the user in a state incorporated in the device main body in advance may include, for example, the first ROM 12 shown in FIG. 7, a hard disk included in the first storage unit 19 shown in FIG. 7 or the like, in which the program is recorded.

It should be noted that, in the present specification, the steps describing the program recorded in the storage medium include not only the processing executed in a time series following this order, but also processing executed in parallel or individually, which is not necessarily executed in a time series. In the present specification, terminologies describing a system refer to a whole apparatus configured with a plurality of devices, a plurality of means and the like.

Although some embodiments of the present invention have been described above, the embodiments are merely exemplification, and do not limit the technical scope of the present invention. Other various embodiments can be employed for the present invention, and various modifications such as omission and replacement are possible without departing from the sprits of the present invention. Such embodiments and modifications are included in the scope of the invention and the summary described in the present specification, and are included in the invention recited in the claims as well as the equivalent scope thereof.

## Claims

1. An application generation apparatus, comprising:
determination means that determines whether a URL is input into a preset cell among a plurality of cells composing a spreadsheet displayed by executing spreadsheet software; and
generation means that causes another terminal to acquire an HTML file based on URL information included in code information, and generates a parameter file for defining an application having a function of displaying a browser based on the HTML file, in a case in which the determination means determines that the URL is input.

2. The application generation apparatus according to claim 1, wherein the determination means determines a character string including at least a first character string of "http://" or "https://" as the URL.

3. The application generation apparatus according to claim 1, further comprising function addition means that adds, to the application, a function of storing the URL information acquired from the code information by executing the application.

4. The application generation apparatus according to claim 1, wherein the function addition means adds a function of outputting a result of executing the application, in a format that can be stored in a spreadsheet that is displayed by executing the spreadsheet software.

5. An application generation method, comprising:
determining step of determining whether a URL is input into a preset cell among a plurality of cells composing a spreadsheet displayed by executing spreadsheet software; and
generating step of causing another terminal to acquire an HTML file based on URL information included in code information,
and generating a parameter file for defining an application having a function of displaying a browser based on the HTML file, in a case in which the URL is determined to be input in the determining step.

6. A non-temporary computer readable medium storing a program for causing a computer to execute the steps of:
determining whether a URL is input into a preset cell among a plurality of cells composing a spreadsheet displayed by executing spreadsheet software; and
causing another terminal to acquire an HTML file based on URL information included in code information, and generating a parameter file for defining an application having a function of displaying a browser based on the HTML file, in a case in which the URL is determined to be input.
